**Europäisches Patentamt**

**European Patent Office**

**Office européen des brevets**

(11) Veröffentlichungsnummer: **0 458 126 A2**

# EUROPÄISCHE PATENTANMELDUNG

(21) Anmeldenummer: **91107413.6**

(22) Anmeldetag: **07.05.91**

(51) Int. Cl.5: **F16B 19/00**

(30) Priorität: **21.05.90 DE 4016343**

(43) Veröffentlichungstag der Anmeldung:
**27.11.91 Patentblatt 91/48**

(84) Benannte Vertragsstaaten:
**DE ES GB SE**

(71) Anmelder: **SAXONIA-FRANKE GMBH & CO.**
**Kuhnbergstrasse 1**

**W-7320 Göppingen-Gewerbepark Voralb(DE)**

(72) Erfinder: **Ausprung, Erich**
**Zeppelinstrasse 48**
**W-7340 Geislingen/Steige(DE)**

(74) Vertreter: **von Puttkamer, Nikolaus, Dipl.-Ing.**
**Pienzenauerstrasse 2**
**W-8000 München 80(DE)**

(54) **Selbstsichernder Sperrbolzen.**

(57) Die Erfindung betrifft einen selbstsichernden Sperrbolzen, dessen hohlzylinderförmiger Schaft (1) von einer Seite her in Bohrungen von Bauteilen bis zu wenigstens einem einstückig an den Schaft angeformten Anschlagelement (8) einsteckbar ist. Der Bolzen weist wenigstens ein federndes Sperrorgan (4) auf, das einstückig an den Schaft (1) angeformt ist und im eingesteckten Zustand des Sperrbolzens an der anderen Seite der Bauteile angreift. Der Schaft (1) des Bolzens weist einen vorderen Bereich (A) auf, dessen Außendurchmesser (∅1) kleiner ist als der Außendurchmesser (∅2) eines federnd verformbaren mittleren Bereiches (B) des Schaftes. Der Außendurchmesser (∅2) des mittleren Bereiches (B) ist größer als der Innendurchmesser der den mittleren Bereich (B) aufnehmenden Bohrung. Der hintere Endbereich (C) des Schaftes (1) besitzt einen Querschnitt mit wenigstens einem federnd verformbaren Teilbereich, der über die Kreislinie nach außen hinausragt, die durch den Innendurchmesser der den hinteren Bereich (C) aufnehmenden Bohrung bestimmt wird.

FIG. 1

Rank Xerox (UK) Business Services

Die Erfindung betrifft einen selbstsichernden Sperrbolzen nach dem Oberbegriff des Patentanspruches 1.

Selbstsichernde Sperrbolzen dieser Art sind bekannt. Beispielsweise ist in der DE-PS 33 47 503 ein selbstsichernder Sperrbolzen beschrieben, dessen hohlzylinderförmiger Schaft von einer Seite her in Durchgangslöcher von Bauteilen bis zu einstükkig an den Schaft angeformten Anschlagelementen einsteckbar ist. Dieser Sperrbolzen weist ferner ein einstückig an den Schaft angeformtes Sperrorgan auf, das im eingesteckten Zustand des Sperrbolzens an der anderen Seite der Bauteile angreift. Der Schaft der Sperrbolzens besteht aus zwei Schafthälften, die über einen einstückig an sie angeformten Steg miteinander verbunden sind. Das Sperrorgan weist die Form einer federnden Zunge auf, die an den Steg oder an eine Schafthälfte angeformt ist. Beim Einstecken des Bolzens in die Durchgangslöcher der Bauteile federt die am Rand des in der Einsteckrichtung gesehenen vorderen Durchgangsloches angreifende Zunge nach innen. Wenn der Bolzen in die Durchgangslöcher der Bauteile eingesteckt ist, federt die genannte Zunge hinter dem Durchgangsloch des letzten Bauteiles derart nach außen, daß sie den Rand dieses Durchgangsloches hintergreift.

Das Anschlagelement ist in der Form eines radial verlaufenden Lappens an eine Schafthälfte angeformt. Es übergreift den Randbereich des vordersten Durchgangsloches, wenn der Sperrbolzen in die Durchgangslöcher der Bauelemente eingeschoben ist.

Die Aufgabe der vorliegenden Erfindung besteht darin, einen derartigen Bolzen dahingehend zu verbessern, daß er auch dann in den Durchgangslöchern der Bauelemente klapperfrei und die Bauelemente zueinander axial ausrichtend gehalten wird, wenn die Bohrungen der Bauelemente nicht genau dieselben Durchmesser aufweisen.

Diese Aufgabe wird durch einen selbstsichernden Bolzen der eingangs genannten Art gelöst, der durch die in dem kennzeichnenden Teil des Patentanspruches 1 angegebenen Merkmale gekennzeichnet ist.

Der wesentliche Vorteil des erfindungsgemäßen Bolzens besteht darin, daß sein Schaft Bereiche verschiedener Querschnittsformen aufweist. Dadurch, daß der vorliegende Bolzen in seinem mittleren Bereich einen größeren Druchmesser aufweist als im vorderen Endbereich, wird erreicht, daß er im Bereich des Durchgangsloches eines mittleren Bauteiles zusammengequetscht und klapperfrei festgehalten wird. Da in der Einschubrichtung gesehen der vor dem mittleren Bereich liegende Endbereich des Bolzens einen kleineren Durchmesser als der mittlere Bereich aufweist, wird ein leichtes Einschieben des Bolzens in die grob zueinander ausgerichteten Durchgangsbohrungen der Bauteile und ein genaues axiales Ausrichten dieser Durchgangsbohrungen erreicht. Dadurch, daß der in der Einschubrichtung gesehen hinter dem mittleren Bereich liegende Endbereich des Bolzens einen oval bzw. elliptisch verformten Querschnitt aufweist, wird erreicht, daß dieser Endbereich ebenfalls fest und klapperfrei in dem ihm zugeordneten Durchgangsloch eines Bauteiles gehalten wird. Besonders vorteilhaft ist die Anwendung des vorliegenden Bolzens bei der Befestigung beispielsweise des Endbereiches eines Pedalgestänges oder dergleichen an einem Gabelkopf dadurch, daß ein Durchgangsloch des Endbereiches des Pedalgestänges und die einander gegenüberliegenden Durchgangslöcher des Gabelkopfes zueinander ausgerichtet werden. In diesem Fall wird der mittlere Bereich fest in dem Durchgangsloch des Endbereiches des Pedalgestänges gehalten, während der in der Einsteckrichtung gesehen hinter dem mittleren Bereich liegende Endbereich mit dem ovalen Querschnitt fest in dem einen Durchgangsloch des Gabelkopfes gehalten wird. Auf diese Weise werden der Gabelkopf und das Pedalgestänge genau zueinander ausgerichtet und in dieser definierten Lage festgehalten, wobei Klappergeräusche zuverlässig vermieden werden.

Ein weiterer Vorteil des vorliegenden Bolzens besteht darin, daß er auch mit relativ kleinen Schaftdurchmessern hergestellt werden kann. Vorteilhafterweise kann der vorliegende Sperrbolzen durch einfache Verfahrensschritte auch mit verhältnismäßig großen Materialstärken aus einem Stück hergestellt werden. Insbesondere ist er durch nur eine Stanz- und Biegeoperation herstellbar. Da die zur Herstellung des vorliegenden Sperrbolzens erforderlichen Werkzeuge vergleichsweise einfach und billig sind, ist er auch vergleichsweise billig herstellbar. Der vorliegende Bolzen kann wegen seiner Einteiligkeit leicht und zeitsparend gehandhabt werden. Im Vergleich zu bekannten massiven Bolzen weist er in Bezug auf Scherbeanspruchungen eine größere Festigkeit auf. Außerdem läßt sich im Vergleich zu massiven Bolzen vorteilhafterweise sehr viel Material einsparen. Der vorliegende Bolzen ist auch einfacher herstellbar als ein Bolzen, dessen Schaft aus einem massiven rohrförmigen Element besteht.

Weitere vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigt:

Fig. 1      eine erste Seitenansicht des vorliegenden selbstsichernden Sperrbolzens;

Fig. 2      einen gegenüber der Ansicht der Fig. 1 um 90° gedrehte zweite Ansicht des vorliegenden Sperrbolzens;

Fig. 3 und 4 die in den Fig. 1 und 2 angegebenen Schnitte durch den vorliegenden Sperrbolzen; und

Fig. 5 eine Weiterbildung der Erfindung.

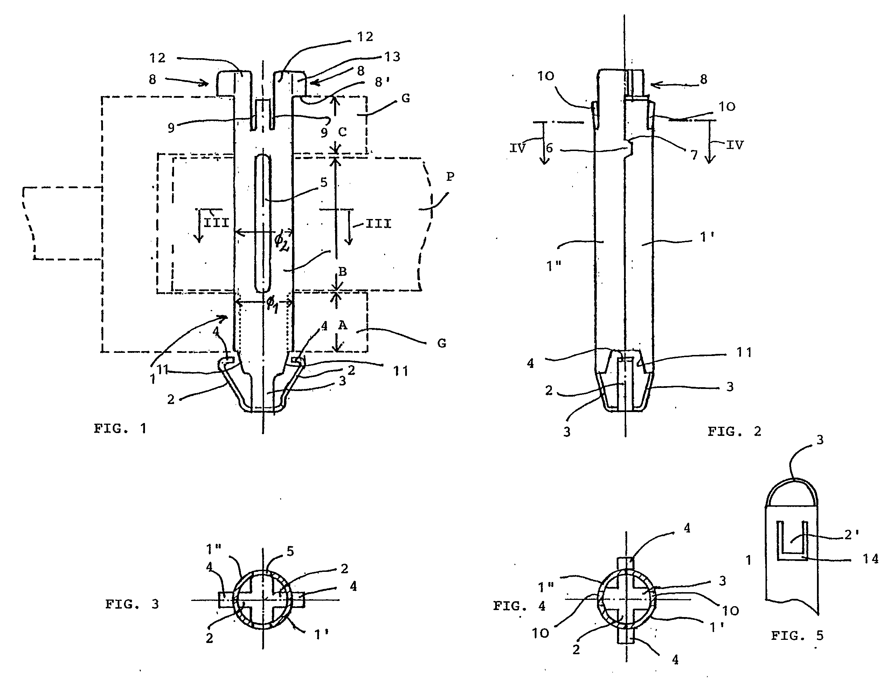

Wie aus der Fig. 1 zu ersehen ist, besteht der vorliegende Sperrbolzen aus einem Schaft 1, einem Sperrorgan 2, und wenigstens einem Anschlagelement. Der Schaft 1 besteht in der insbesondere aus der Fig. 2 ersichtlichen Weise vorzugsweise aus zwei insbesondere halbzylinderförmigen Schaftteilen 1' und 1", die über einen Steg 3 an der einen Seite des Schaftes 1 miteinander verbunden sind. Dabei weist der Steg 3 etwa die Form eines gebogenen Bandes auf, das sich von der einen Seite des Schaftes 1 weg erstreckt. Vorzugsweise weisen die Sperrorgane 2 die Form von federnden länglichen Zungen auf, die an den Steg 3 angeformt sind und sich senkrecht zur Längsachse des Steges 3 erstrecken. In der ersichtlichen Weise verlaufen die Sperrorgane 2 schräg in der Richtung zur einen Seite des Schaftes 1 derart, daß die jeweiligen körperfernen Enden der Sperrorgane 2 in radialer Richtung gesehen über den Umfang des Schaftes 1 hinausragen. Die eine Seite des Schaftes 1 und die körperfernen Enden der Sperrorgane 2 sind jeweils so weit voneinander beabstandet, daß die Enden der Sperrorgane 2 so weit federnd nach innen gebogen werden können, daß sie in radialer Richtung nicht über den Umfang des Schaftes 1 hinausragen.

In der aus der Fig. 2 ersichtlichen Weise können dann, wenn die körperfernen Enden der Sperrorgane 2 an der einen Seite des Schaftes 1 die Enden der Schaftteile 1', 1" überlappen, in den Endbereichen der einen Seite der Schaftteile 1' und 1" Aussparungen 11 vorgesehen sein, die das genannte Einfedern der Sperrorgane 2 ermöglichen.

In der insbesondere aus der Fig. 1 ersichtlichen Weise ist vorzugsweise an jedem Schaftteil 1', 1" ein Anschlagelement 8 vorgesehen, das radial über den Umfang des Schaftteiles 1 nach außen hinausragt. Vorzugsweise sind die Anschlagelemente 8 dadurch gebildet, daß jedes Schaftteil 1', 1" in axialer Richtung eine Verlängerung 12 aufweist, die an der anderen Seite des Schaftes 1 über dessen Ende hinausragt und eine Abwinkelung 13 besitzt, die über den Umfang des Schaftes 1 radial vorsteht. Beim Verdrehen des Bolzens um seine Längsachse können sich die Kanten 8' der Elemente 8 in dem die Bohrung des entsprechenden Bauelementes umgebenden Bereich zur Bildung einer Verdrehsicherung verkrallen.

Der Fig. 2 ist entnehmbar, daß die aneinandergrenzenden Kanten der Schaftteile 1', 1" Sicherungslaschen 6 aufweisen können, die sich jeweils in Umfangsrichtung über eine Kante eines Schaftteiles 1' bzw. 1" hinauserstrecken. In dem entsprechenden Bereich des gegenüberliegenden Schaftteiles 1" bzw. 1' ist eine Ausnehmung 7 vorgesehen, deren Form so bemessen ist, daß sie von der Sicherungslasche 5 ausgefüllt wird, wenn die beiden Schaftteile 1', 1" so aneinanderliegen, daß sie den Schaft 1 bilden. Vorzugsweise sind die Sicherungslaschen 6 trapezförmig ausgebildet, so daß sie besonders leicht in die komplementären Ausnehmungen 7 eingeführt werden können. Die Aufgabe derartiger Sicherungslaschen 6 und der entsprechenden Ausnehmungen 7 besteht darin, eine Relativbewegung zwischen den Schaftteilen 1', 1" in axialer Richtung zu vermeiden. Eine derartige Relativbewegung kann beispielsweise dann auftreten, wenn beim Einsetzen des Sperrbolzens in ein Bohrloch oder dergleichen die beiden Schafthälften 1', 1" ungleich beansprucht werden. Beim Zusammenbiegen der Schaftteile 1', 1" zum Schaft 1 bewirken die Sicherungslaschen 6 und die Ausnehmungen 7 eine automatische Justierung der Schaftteile 1', 1" zueinander.

In der aus der Fig. 1 ersichtlichen Weise weist der Schaft 1 entlang seiner Länge in Einschubrichtung gesehen einen vorderen Bereich A, einen mittleren Bereich B und einen hinteren Bereich C auf. Der vordere Bereich A besitzt einen ersten Durchmesser $\varnothing 1$, der etwa dem Durchmesser der Durchgangslöcher des Pedalgestänges P und des Gabelkopfes G entspricht. Der mittlere Bereich B besitzt einen Durchmesser $\varnothing 2$, der größer ist als der Durchmeser $\varnothing 1$ des vorderen Bereiches A. Dies bedeutet, daß der mittlere Bereich B in dem ihm zugeordneten Durchgangsloch des Pedalgestänges P, dessen Durchmesser kleiner ist als der Durchmeser $\varnothing 2$, zusammengedrückt wird. Um dies zu ermöglichen, weisen die Schaftteile 1' und 1" vorzugsweise jeweils eine Aussparung 5 auf, die sich insbesondere entlang des gesamten mittleren Bereiches B in der Längsrichtung des Schaftes 1 mittig durch die Schaftteile 1' bzw. 1" erstrecken. Der hintere Endbereich C weist in der aus der Fig. 4 erkennbaren Weise einen vorzugsweise ovalen Querschnitt auf, der dadurch gebildet ist, daß in die Schaftteile 1' und 1" an der anderen Seite des Schaftes 1 vom Ende ausgehend voneinander beabstandete Längsschlitze 9 eingebracht sind, die ein Längsteil 10 zwischen sich begrenzen, das durch eine Biegeoperation so abgewinkelt bzw. abgebogen wird, daß es geringfügig aus dem Umfang der Schaftteile 1' bzw. 1" nach außen abgebogen ist. Dies bedeutet, daß beim Einsetzen des Sperrbolzens die Längsteile 10 fest an der Innenwandung des entsprechenden Durchgangsloches des Gabelkopfes G angreifen.

Vorzugsweise wird der beschriebene Sperrbolzen durch aufeinanderfolgende Stanz- und Biegeoperationen einstückig aus einem Federblechteil hergestellt. Es ist auch denkbar gemäß Fig. 5 an der Stelle der Sperrorgane 2, die an den Steg 3 angeformt sind, Sperrorgane 2' vorzusehen, die die Form von länglichen federnden Zungen aufweisen, die durch einen Freischnitt 14 aus der Umfangsfläche der Schaftteile 1' und/oder 1" derart herausgeformt sind, daß sie sich ausgehend von der einen Seite des Schaftes 1 in Richtung auf die andere Seite des Schaftes 1 erstrecken und daß ihre körperfernen Enden über den Umfang des Schaftes hinausragen.

Entsprechend den in der Fig. 1 enthaltenen punktierten Linien kann der Bereich A des Schaftes einen Durchmesser Ø1 aufweisen, der erheblich kleiner ist als der Durchmesser der Bohrung des Gabelkopfes G zur Aufnahme des Bereiches C. Dies ist dann der Fall, wenn die sich gegenüberliegenden Bohrungen des Gabelkopfes unterschiedliche Durchmesser aufweisen, um sicher zu stellen, daß der Bolzen in einer vorgegebenen Richtung, genauer gesagt in der Richtung, in der der Bereich A mit dem kleineren Durchmesser Ø1 zuerst durch die Bohrung mit dem größeren Durchmesser des Gabelkopfes G und dann durch die Bohrung des Pedalgestänges P geschoben und schließlich in die Bohrung mit dem kleinen Durchmesser des Gabelkopfes G eingeschoben wird.

Im Gegensatz zu dem beschriebenen Bolzen, dessen Schaft 1 aus zwei Schaftteilen 1', 1" zusammengesetzt ist, die über einen Steg 3 miteinander verbunden sind, kann der Schaft des Bolzens auch anders beschaffen, beispielsweise gerollt sein, wobei die unterschiedlichen Durchmesser der Bereiche A, B und C des Schaftes durch unterschiedliche Außendurchmesser des Dornes gebildet werden, über dem der Schaft gerollt wird. In diesem Fall wird ebenfalls die ovale Form des Bereiches C durch die Vorsehung und Ausbiegung der Längsteile 10 erreicht.

Es wird darauf hingewiesen, daß die Erfindung insbesondere in der Schaffung eines selbstsichernden Sperrbolzens zu sehen ist, der einen hinteren Bereich C aufweist, der fest in einer Bohrung eines Bauteiles, insbesondere des Schenkels eines Gabelkopfes G eingreifen kann. Zu diesem Zweck weist der Querschnitt des hinteren Bereiches c wenigstens einen Teilbereich auf, der über die um die Bolzenlängsachse gezogene Kreislinie hinausragt, die durch die genannte Bohrung des Schenkels des Gabelkopfes G bestimmt wird. Zweckmäßigerweise ist dieser Querschnitt oval gestaltet. Beim Einsetzen in die Bohrung wird der über die Kreislinie vorragende Teilbereich federnd nach innen gedrückt, so daß er fest an der Innenfläche der Bohrung angreift bzw. anliegt. Der hintere Bereich C des Bolzens sitzt daher fest in der Bohrung des genannten Schenkels des Gabelkopfes G. Der mittlere Bereich B des vorliegenden Bolzens weist einen Durchmesser auf, der größer ist als der Durchmesser der Bohrung eines zweiten Bauteiles, insbesondere eines im Gabelkopf G gehaltenen Pedalgestänges P. Beim Einsetzen des mittleren Bereiches B in die Bohrung des Pedalgestänges P wird dieser aufgrund der vorhandenen Aussparungen so verformt, daß der Umfang des mittleren Bereiches B fest an der Innenfläche der Bohrung des Pedalgestänges P anliegt. Dadurch werden die den hinteren Bereich C aufnehmende Bohrung und die den mittleren Bereich B aufnehmende Bohrung und die entsprechenden Bauteile exakt zueinander ausgerichtet. Im Falle der Befestigung des Pedalgestänges P im Gabelkopf G durch den vorliegenden Bolzen wird daher erreicht, daß der gesamte Gabelkopf G mit seinen beiden Schenkeln in Bezug auf das Pedalgestänge P auch dann exakt ausgerichtet wird, wenn die Bohrungen des Gabelkopfes und des Pedalgestänges im Rahmen der üblichen Toleranzen voneinander abweichen. Bei den entsprechenden bekannten Bolzen ist dies nicht der Fall, weil nicht dafür Sorge getragen ist, daß bei den genannten Abweichungen der mittlere Bereich und der hintere Endbereich fest an den Innenflächen der ihnen zugeordneten Bohrungen anliegen, so daß radiale Relativverschiebungen möglich sind.

## Patentansprüche

1. Selbstsichernder Sperrbolzen, dessen hohlzylinderförmiger Schaft von einer Seite her in Bohrungen von Bauteilen bis zu wenigstens einem einstückig an den Schaft angeformten Anschlagelement einsteckbar ist, und mit wenigstens einem federnden Sperrorgan, das einstückig an den Schaft angeformt ist und im eingesteckten Zustand des Sperrbolzens an der anderen Seite der Bauteile angreift, dadurch gekennzeichnet, daß der Schaft (1) einen vorderen Bereich (A) aufweist, dessen Außendurchmesser (Ø1) kleiner ist als der Außendurchmesser (Ø2) eines federnd verformbaren mittleren Bereiches (B) des Schaftes, daß der Außendurchmesser (Ø2) des mittleren Bereiches (B) größer ist als der Innendurchmesser der den mittleren Bereich (B) aufnehmenden Bohrung, und daß der hintere Endbereich (C) des Schaftes einen Querschnitt mit wenigstens einem federnd verformbaren Teilbereich aufweist, der über die Kreislinie nach nach außen hinausragt, die durch den Innendurchmessser der den hinteren Bereich (C) aufnehmenden Bohrung bestimmt wird.

2. Bolzen nach Anspruch 1, dadurch gekennzeichnet, daß der Querschnitt des hinteren Endbereiches (C) oval ist.

3. Bolzen nach Anspruch 1 oder 2, dadurch gekennzeichnet, daß der mittlere Bereich (B) sich in Bezug auf die Längsachse des Schaftes (1) gegenüberliegende längliche, schlitzförmige Aussparungen (5) aufweist.

4. Bolzen nach Anspruch 3, dadurch gekennzeichnet, daß sich die Aussparungen im wesentlichen entlang der gesamten Länge des mittleren Bereiches (B) erstrecken.

5. Bolzen nach einem der Ansprüche 1 bis 4, dadurch gekennzeichnet, daß der Querschnitt des hinteren Bereiches (C) dadurch gebildet ist, daß er wenigstens zwei in der Längsrichtung verlaufende, voneinander beabstandete, eine vorgegebene Strecke in den hinteren Bereich (C) vom freien Ende desselben hineinverlaufende Längsschnitte (9) aufweist, die ein Längsteil (10) bilden, das aus dem Umfang des hinteren Bereiches (C) über die Kreislinie nach außen gebogen ist.

6. Bolzen nach einem der Ansprüche 1 bis 5, dadurch gekennzeichnet, daß der Durchmesser (Ø1) des vorderen Bereiches (A) erheblich kleiner ist als der Durchmesser (Ø2) des mittleren Bereiches (B).

7. Bolzen nach einem der Ansprüche 1 bis 6, dadurch gekennzeichnet, daß der Schaft (1) aus zwei Schaftteilen (1', 1") gebildet ist, die an der einen Seite des Schaftes über einen Steg (3) miteinander verbunden sind und zur Bildung des Schaftes (1) um den Steg (3) derart gebogen sind, daß sie aneinanderliegen.

8. Bolzen nach einem der Ansprüche 4 bis 7, dadurch gekennzeichnet, daß jedes Schaftteil (1', 1") mittig eine Aussparung (5) aufweist.

9. Bolzen nach Anspruch 7 oder 8, dadurch gekennzeichnet, daß jedes Schaftteil (1', 1") mittig ein Längsteil (10) aufweist.

10. Bolzen nach einem der Ansprüche 1 bis 6, dadurch gekennzeichnet, daß er in die zueinander ausgerichteten Bohrungen eines ein Pedalgestänge (P) aufnehmenden Gabelkopfes (G) derart einsteckbar ist, daß der vordere (A) und hintere Bereich (C) in jeweils einer Bohrung des Gabelkopfes (G) und der mittlere Bereich (B) in der Bohrung des Pedalgestänges (P) angeordnet sind.

11. Bolzen nach einem der Ansprüche 5 bis 10, dadurch gekennzeichnet, daß am Schaft (1) sich in Bezug auf die Längsachse desselben gegenüberliegend wenigstens ein Paar von Längsteilen (10) vorgesehen ist.

FIG. 1

FIG. 2

FIG. 3

FIG. 4

FIG. 5

EP 0 458 126 A2